# EUROPEAN PATENT SPECIFICATION

(11) **EP 2 150 956 B1**
(45) Date of publication and mention of the grant of the patent: **12.01.2011**
(21) Application number: 08755400.2
(22) Date of filing: 13.05.2008
(51) Int. Cl.: G11B 33/04, G11B 23/03, B65D 85/58

(54) **PACKAGES FOR HOLDING COMPACT DISCS**
VERPACKUNGEN ZUM HALTEN VON COMPACT DISCS
EMBALLAGES POUR CONTENIR DES DISQUES COMPACTS

(30) Priority: 25.05.2007 US 931913 P
(43) Date of publication of application: 10.02.2010
(73) Proprietor: MeadWestvaco Corporation, Richmond, VA 23219-0501 (US)
(72) Inventor: FREITAG, Kenny, Cheshire, MA 01225 (US)
(74) Representative: Coulson, Elizabeth Eve
(86) International application number: PCT/US2008/063538
(87) International publication number: WO 2008/147686

(56) References cited:
- US-A- 5 799 782
- US-A1- 2002 038 770
- US-A1- 2007 012 582

## Description

### REFERENCE TO RELATED APPLICATIONS

### BACKGROUND OF THE INVENTION

### 1. Field of the Invention

The present invention relates generally to product containers, and more particularly to containers for storing one or more Blu-ray or other media discs.

### 2. Background of the Related Art

At one time, video equipment was difficult to use and expensive such that few, other than professionals, had record and playback equipment. In the current information age, every home and many automobiles are being outfitted with video equipment. Usually, the content for these systems is stored on a compact disc, digital video disc (DVD) and the like. Technology that improves upon the playback and storage capacity is constantly being developed such as Blu-ray discs and players.

The media discs are typically kept in clam shell cases. A common practice is to include a secondary insert tray in the clam shell case to hold an additional disc. The insert tray is retained at the pivot end. When the clam shell case is open, the insert tray is free to undesirably flop from side to side. As such, the clam shell case can be awkward to handle and the media discs are susceptible to damage. For examples, see U.S. Patent No. 4,709,812 to Kosterka and U.S. Patent Application No. 11/393,291 to Rufo and US2007/0012582. The latter comprising a case having a lid, spine and base portions a main hinge including a spaced pair of hinge posts and a main tray pivotally connected to the main hinge structure.

### SUMMARY OF THE INVENTION

Despite the myriad of media disc cases, there is still a need for an improved case that minimizes the shortcomings associated with conventional clam shell cases. More specifically, there is a need for an improved case or package that is easy to handle, safely retains the media discs and is cost effective to manufacture.

According to a first aspect, the invention provides a package for housing media discs comprising a first cover having a detent, a second cover opposing the first cover and hingedly connected thereto, wherein at least one of the first and second covers are configured to retain a disc and comprising an intermediate holder hingedly connected to the first cover, configured to retain at least one disc and the intermediate holder including a projection, the detent of the first cover for capturing the projection and for providing a retentive force to maintain the intermediate holder in a retained position.

Preferably, the pa ckage further comprises a rosette on the first cover for retaining a media disc. Optionally, at least one block is provided on the first cover for setting a gap between the media disc and the at least one disc when said discs are present. Preferably, the package comprises means for retaining the package in the closed position. Optionally, said means is at least one female receptacle formed on the second cover and at least one male projection formed on the first cover to engage the at least one female receptacle.

Optionally, the first cover comprises:
i) a planar member having a first upstanding wall that forms a circular recess and at least one finger well opening to the circular recess;
ii) a rosette located centrally within the circular recess for engaging a central aperture of a media disc; and
iii) a second upstanding wall around a periphery of the planar member that forms an indentation for opening the package;
and wherein the a second cover comprises:
i) a planar member having a first upstanding wall around a periphery of the planar member that forms an indentation for opening the package;
ii) a second upstanding wall that forms a circular recess and at least one finger well opening to the circular recess; and
iii) a rosette located centrally within the second circular recess for engaging a central aperture of a media disc.

Optionally, the package further comprises a spine hingedly connecting the first and second covers for allowing the first and second covers to rotate between a closed position in which the first and second covers are aligned to protect media discs therein and an open position in which the first and second covers are separated to allow access to the media discs therein; a hinge mechanism mounted on the first cover and wherein said intermediate holder is mounted on said hinge mechanism.

Preferably, the intermediate holder having: a planar member has a periphery that forms a ridge for engaging the detent, a first upstanding wall that forms a circular recess and at least one finger well opening to the circular recess and a rosette located centrally within the circular recess for engaging a central aperture of a media disc. Optionally, the indentations align in the closed position.

Optionally, the intermediate holder further includes: a second upstanding wall that forms a second circular recess and at least one finger well opening to the circular recess on an opposing side from the first upstanding wall and a second rosette located centrally within the second circular recess for engaging a central aperture of a media disc. Optionally, the second cover includes clips to retain promotional literature.

Optionally, the projection of the intermediate holder projects from an outer surface of the intermediate holder and wherein the detent is formed on an inner surface of the first cover. Optionally, the detent is formed on an inner surface of a recessed portion of the first cover.

Optionally, the package comprises more than one intermediate holder and wherein more than one of the intermediate holders comprises a projection or ridge for being captured by a detent of the first cover or second cover for providing a retentive force to maintain said intermediate holders in a retained position.

The subject disclosure provides a package for housing multiple media discs including a first cover having a planar member with a first upstanding wall that forms a circular recess and at least one finger well opening to the circular recess, a rosette located centrally within the circular recess for engaging a central aperture of a media disc, a second upstanding wall around a periphery of the planar member that forms an indentation for opening the package, and a detent. A second cover also has a planar member and an upstanding wall around a periphery of the planar member that forms an indentation for opening the package. A spine hingedly connects the first and second covers for allowing the first and second covers to rotate between a closed position in which the first and second covers are aligned to protect media discs therein and an open position in which the first and second covers are separated to allow access to the media discs therein. A hinge mechanism mounts on the first cover and an intermediate holder mounts on the hinge mechanism. The intermediate holder has a planar member having a periphery that forms a ridge for engaging the detent, a first upstanding wall that forms a circular recess and at least one finger well opening to the circular recess, and a rosette located centrally within the circular recess for engaging a central aperture of a media disc.

The subject disclosure is also directed to a package for housing media discs including a first cover forming a detent, a second cover opposing the first cover and hingedly connected thereto, wherein at least one of the first and second covers are configured to retain a disc. An intermediate holder hingedly connects to the first cover and includes a projection for engaging the detent of the first cover, wherein the intermediate holder is configured to retain at least one disc. A rosette on the first cover can retain a media disc and a pair of blocks on the first cover set a gap between the media disc and the at least one disc when present. The package also has at least one female receptacle formed on the first cover and at least one male projection formed on the second cover to engage the at least one female receptacle to retain the package in the closed position.

### BRIEF DESCRIPTION OF THE DRAWINGS

So that those having ordinary skill in the art will better understand how to make and use the containers of the subject invention, embodiments thereof will be described below with reference to the following drawings.

Fig. 1 is a perspective view of a package that is constructed in accordance with a preferred embodiment of the present invention, wherein the package is in the open position.

Fig. 2 is a detailed perspective view of a portion of the package of Fig. 1.

Fig. 3 is a cross-sectional view of the tray locking detent of the package of Fig. 1, wherein the package is in the closed position.

Fig. 4 is a perspective exploded view of the hinge and coupling pin of the package of Fig. 1.

Fig. 5 is a perspective view of an intermediate holder separated from a package that is constructed in accordance with a preferred embodiment of the present invention.

Fig. 6 is a perspective view of another package that is constructed in accordance with a preferred embodiment of the present invention, wherein the package is in the open position.

Fig. 7 is a perspective view of the intermediate holder separated from the package of Fig. 6.

Fig. 8 is a perspective view of another package that is constructed in accordance with a preferred embodiment of the present invention, wherein the package is in the open position.

Fig. 9 is a perspective view of the intermediate holders separated from the package of Fig. 8.

Fig. 10 is a perspective view of another package that is constructed in accordance with a preferred embodiment of the present invention, wherein the package is in the open position.

Fig. 11 is a perspective view of the intermediate holders separated from the package of Fig. 10.

These and other aspects of the subject invention will become more readily apparent to those having ordinary skill in the art from the following detailed description of the preferred embodiments of the invention taken in conjunction with the figures.

### DETAILED DESCRIPTION OF THE PREFERRED EMBODIMENTS

The present invention overcomes many of the prior art problems associated with packages for media discs. The advantages, and other features of the packages disclosed herein, will become more readily apparent to those having ordinary skill in the art from the following detailed description of certain preferred embodiments taken in conjunction with the drawings which set forth representative embodiments of the present invention and wherein like reference numerals identify similar structural elements whenever possible.

All relative descriptions herein such as left, right, up, down, topside, underside and the like are with reference to the Figures, and not meant in a limiting sense. The illustrated embodiments can be understood as providing exemplary features of varying detail of certain embodiments, and therefore, unless otherwise specified, features, components, modules, elements, and/or aspects of the illustrations can be otherwise combined, interconnected, sequenced, separated, interchanged, positioned, and/or rearranged without materially departing from the disclosed systems or methods. Additionally, the shapes and sizes of components are also exemplary and unless otherwise specified, can be altered without materially affecting or limiting the disclosed technology to holding discs exclusively.

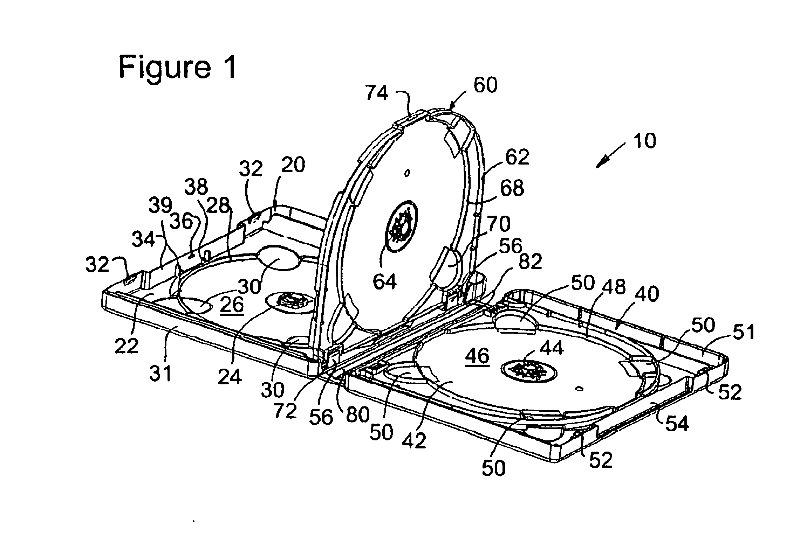

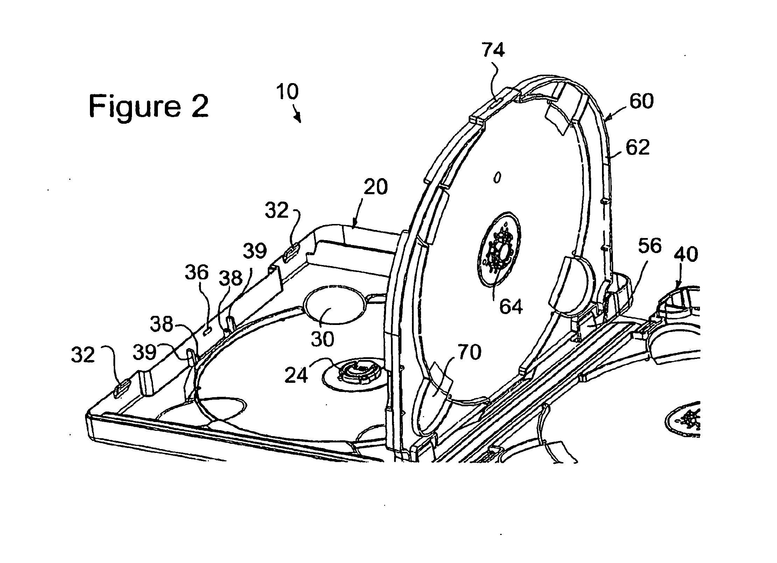

A preferred embodiment of the present invention is illustrated in FIGURES 1-4, in which there is shown an improved package 10 for housing multiple discs. In brief overview, the package 10 includes a lower cover 20 and an upper cover 40 for holding discs (not shown). The two covers 20, 40 are hinged together. However, an additional intermediate holder 60 is secured to the lower cover 20 for holding two more discs (not shown) and can be selectively fixed to the lower cover 20. Thus, the package 10 holds four discs, when configured as shown, yet the intermediate holder 60 can be secured.

Referring generally to FIGURES 1-4, each cover 20, 40 is a relatively rectangular, thin, flat member 22, 42, respectively. The flat or planar members 22, 42 are formed with inner features that can retain a media disc. For example, rosettes 24, 44 capable of gripping and holding a media disc within a recess 26, 46 may be molded on the members 22, 42, respectively. The rosettes 24, 44 are, typically, a vertical cylindrical section that includes radially outwardly biased gripping fingers for engaging the central opening of a media disc placed thereon. A raised border wall 28, 48 provides a guide when placing a disc on the respective rosette, 24, 44 as well as additional security in retaining a disc. Each cover 20, 40 also includes finger wells 30, 50 to facilitate a user removing a disc from the respective rosette 24, 44. The rosettes 24, 44 and finger wells 30, 50 are all well known in the media disk packaging art and need not be described in detail herein.

The covers 20, 40 arc hingcdly coupled together by a spine 80. The spine 80 can be as simple as a relatively rigid rectangular plate coupled to each cover 20, 40 by a thinner flexible member 82 on each side. Each cover 20, 40 includes a wall 31, 51 upstanding from the respective member 22, 42. The wall 31 of the lower cover 20 includes two male projections 32 for releasably engaging female receptacles 52 on the wall 51 of the upper cover 40. As a result, package 10 may be selectively latched in the closed position when it is desired to do so. Partial recesses 34, 54 formed on the lower and upper covers 20, 40, respectively, facilitate opening the package 10. Further, the outer sides (not shown) of the members 20, 40 may have indentations, sleeves and the like to hold promotional material and packaging as is well-known.

The intermediate holder 60 is a partially rounded frame 62 with rosettes 64 (only one shown) on opposing sides for retaining media discs. Each side of the holder 60 also has a border wall 68 and finger wells 70 to help access and secure discs stored thereon. The holder 60 is connected to the lower cover 20 so that the relative position therebetween is set whether the package 10 is open, closed or in any position in between. The lower cover 20 has two hinges 56 coupling to pins 72 on the intermediate holder 60. As a result, the intermediate holder 60 can swing from cover to cover unless retained against the lower cover 20.

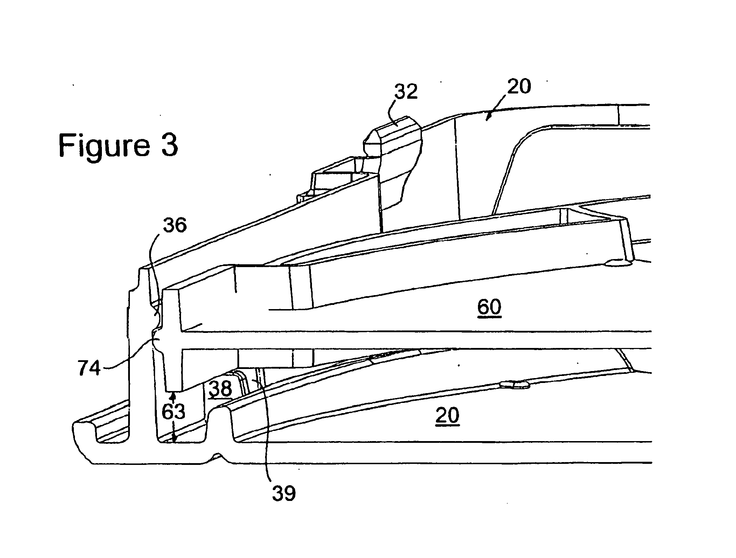

Referring now to Fig. 3, to retain the intermediate holder 60 fixed with respect to the lower cover 20, a detent 36 on the recess 34 captures a raised ridge 74 on the frame 62 and, in turn, provides a retentive force. The wall 31 and frame 62 are resiliently flexible so that upon a user providing a separating or compressive force to the lower cover 20 and holder 60, the ridge 74 easily passes over the detent 36 in either direction. When the holder 60 is held to the lower cover 20 by the detent 36, stopping blocks 38 on the lower cover 20 contact the frame 62 to set a gap 63 between the frame 62 and lower cover 20. The gap 63 prevents the frame 62 or a disc stored thereon from interfering with a media disc stored on the lower cover 20. A guide 39 is adjacent each block 38 in order to help guide the intermediate holder 60 into and out of the retained position.

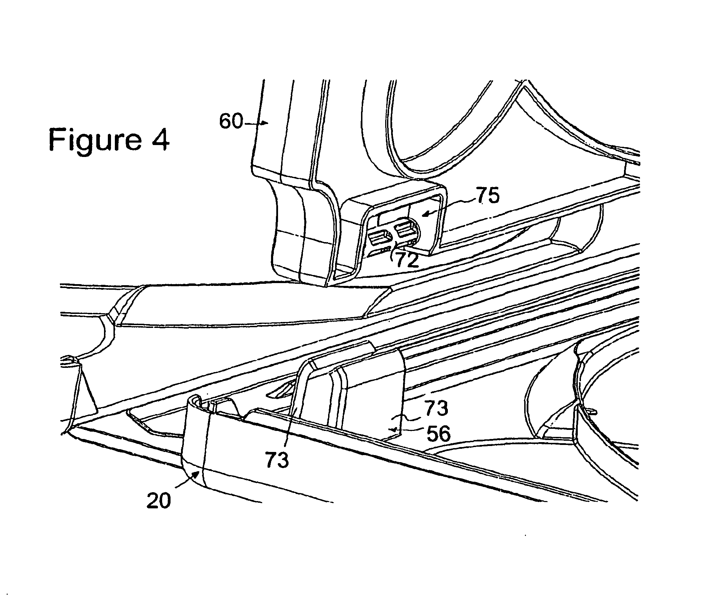

Referring now to Figure 4, the hinge 56 of the lower cover 20 is shown separated from the coupling pin 72 on the intermediate holder 60. The hinge 56 is two opposing arms 73. The pin 72 is supported within a hollow 75 formed by the intermediate holder 60. For assembly, the pin 72 is simply press fit between the arms 73. As would be known to those of ordinary skill in the art upon review of the subject disclosure, many variations of hinge/pin assembly are well within the scope of the subject technology.

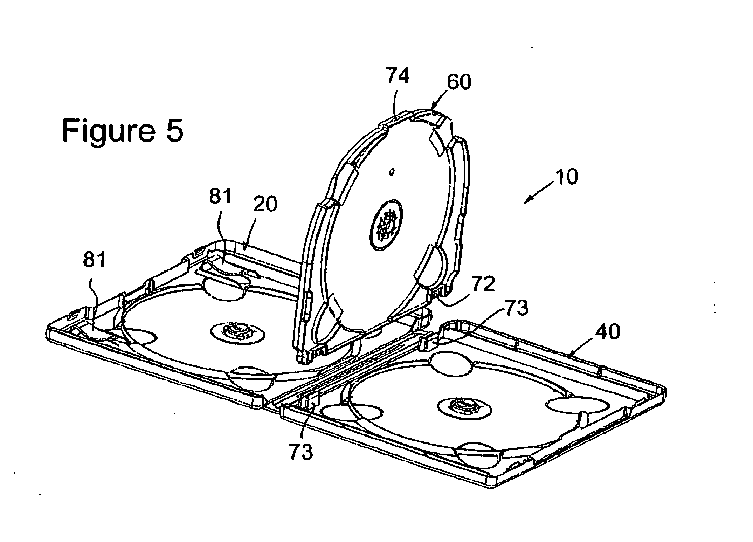

Referring now to Figure 5, a modified version of the package 10 of Figures 1-4 is shown. The package is substantially the same as the package 10 described above, and therefore like reference numerals are used to indicate like elements. The primary modification is the inclusion of tabs 81 that can hold promotional literature, if desired. As can be seen, two hinge arrangements 56 are provided. In alternative embodiments, a single hinge arrangement, preferably centrally located, or three or more could be used at a variety of locations.

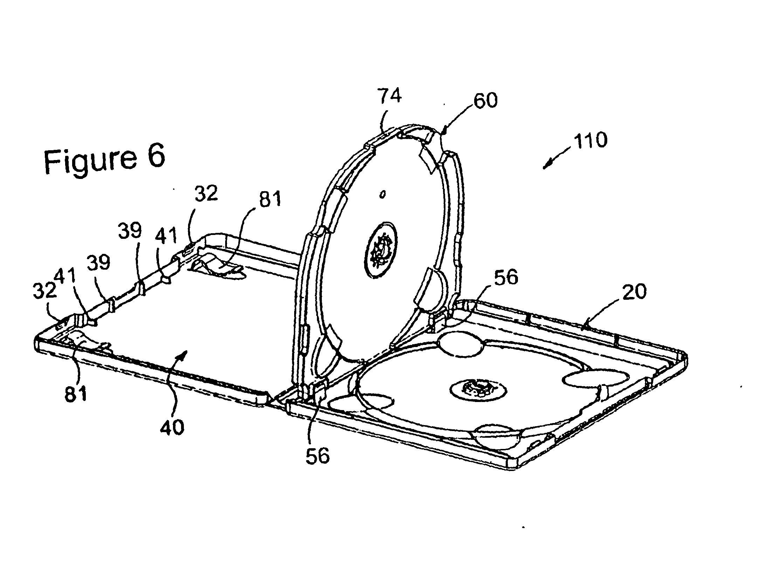

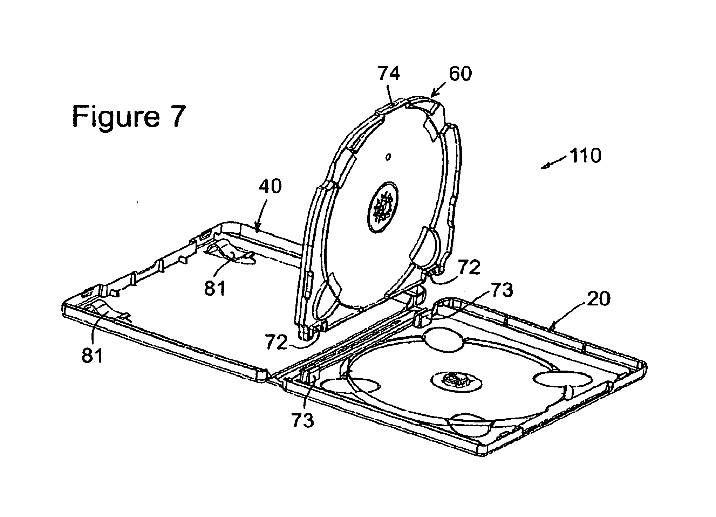

Referring now to Figures 6 and 7, another embodiment of a package of the present technology is indicated generally by the reference numeral 110. The package 110 is substantially the same as the package 10 described above, and therefore like reference numerals are used to indicate like elements. The primary difference of the package 110 in comparison to the package 10 is that the package 110 includes an upper cover 40 configured to retain only promotional literature. On the inside of the package 110, the upper cover 40 has one or more retaining tabs 81 to retain a pamphlet (not shown). Preferably, the upper cover 40 is translucent so that the promotional literature can be seen when the package 110 is closed. The upper cover 40 is also provided with guides 39 and other features or blocks 41 to properly position the covers 20, 40 and intermediate holder 60 together. The package 110 may be fabricated from paper (single, double or multiple ply), polypropylene, any kind of plastic, polylactic acid (PLA) and the like.

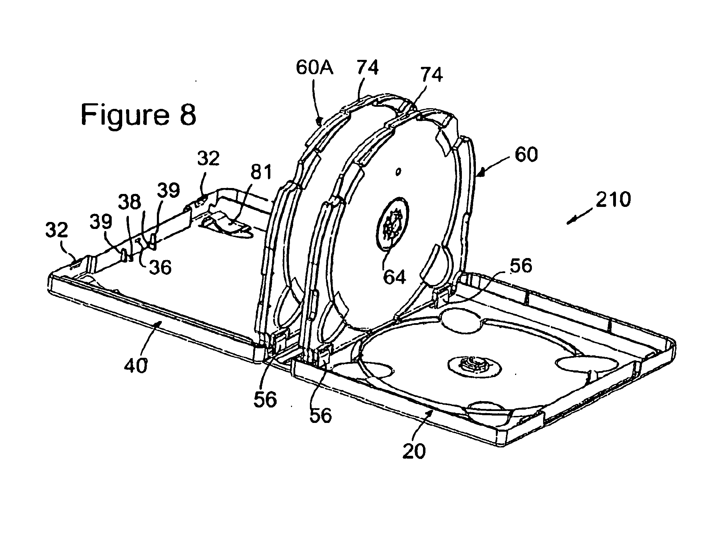

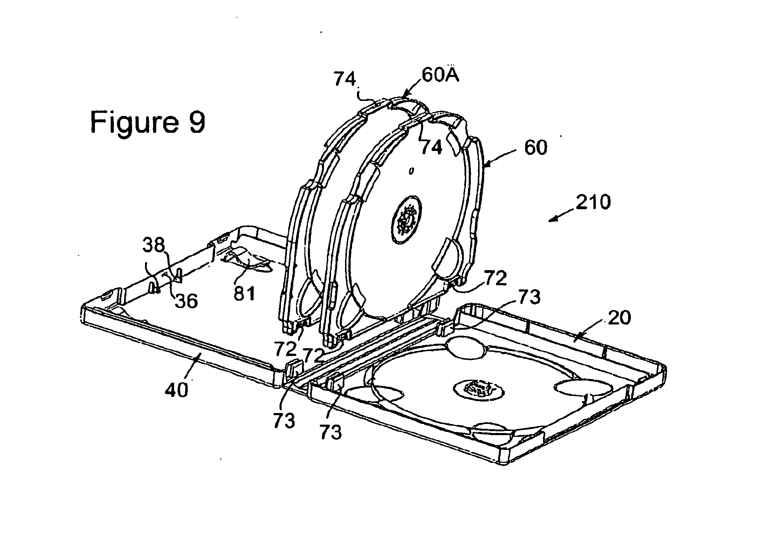

Referring now to Figures 8 and 9, another embodiment of a package of the present technology is indicated generally by the reference numeral 210. The package 210 is substantially the same as the packages 10, 110 described above, and therefore like reference numerals are used to indicate like elements. The primary difference of the package 210 in comparison to the package 110 is that the package 210 includes a second intermediate holder 60A mounted on the upper cover 40 by two hinge 56 and pin 72 arrangements. Additionally, the upper cover 40 also has blocks 38 to prevent the frame 62 or a disc stored thereon from interfering with a media disc stored on the upper cover 40. Guides 39 are also adjacent the blocks 38 in order to help guide the intermediate holder 60A into and out of the retained position.

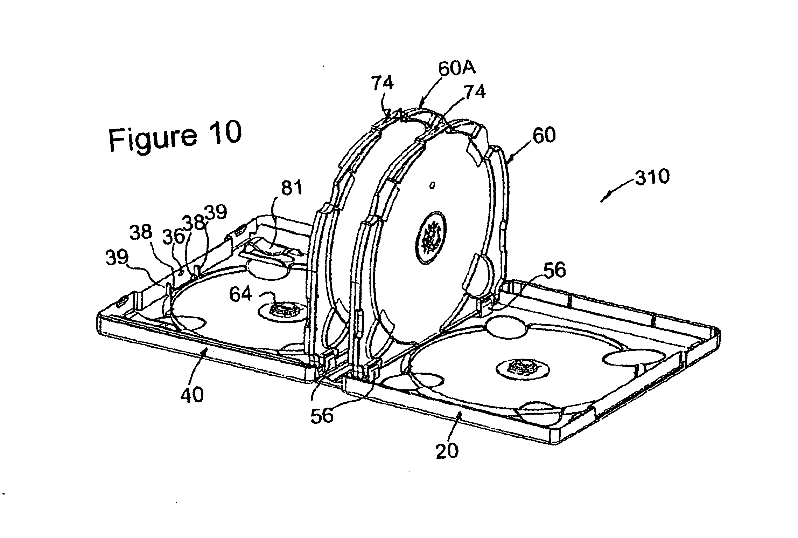

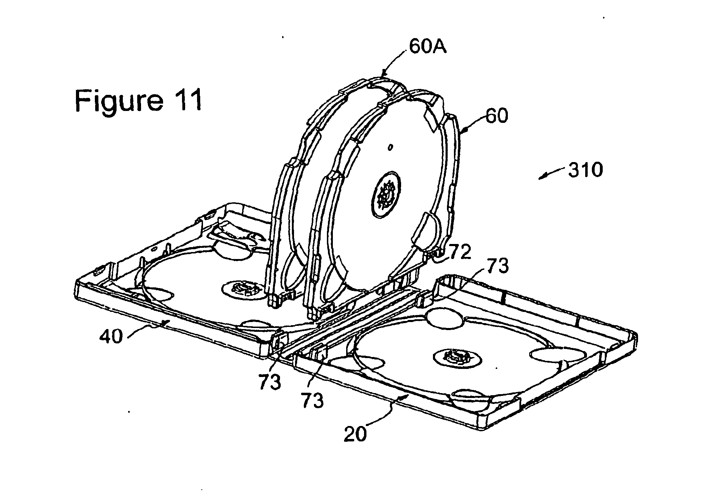

Referring now to Figures 10 and 11, another embodiment of a package of the present technology is indicated generally by the reference numeral 310. The package 310 is substantially the same as the packages 10, 110, 210 described above, and therefore like reference numerals are used to indicate like elements. The primary difference of the package 310 in comparison to the package 10 of Figure 5 is that the package 210 includes a second intermediate holder 60A mounted by on the upper cover 40 by two hinge 56 and pin 72 arrangements. As a result, the package 310 can hold six media disks.

While the invention has been described with respect to preferred embodiments, those skilled in the art will readily appreciate that various changes and/or modifications can be made to the invention within the scope of the invention as defined by the appended claims.

## Claims

1. A package for housing media discs comprising a first cover (20) having a detent (36), a second cover (40) opposing the first cover (20) and hingedly connected thereto, wherein at least one of the first and second covers are configured to retain a disc and comprising an intermediate holder (60), hingedly connected to the first cover (20), configured to retain at least one disc and **characterized by** the intermediate holder (60) including a projection (74), the detent (36) of the first cover (20) for capturing the projection (74) and for providing a retentive force to maintain the intermediate holder (60) in a retained position.

2. A package as recited in claim 1, further comprising a rosette (24) on the first cover (20) for retaining a media disc.

3. A package as recited in claim 1 or 2, further comprising at least one block (38) on the first cover (20) for setting a gap between the media disc and the at least one disc when said discs are present.

4. A package as recited in any preceding claim, further comprising means for retaining the package in the closed position.

5. A package as recited in claim 4, wherein the means is at least one female receptacle (51) formed on the second cover (40) and at least one male projection (32) formed on the first cover (20) to engage the at least one female receptacle (51).

6. A package according to any preceding claim wherein the first cover (20) comprises:
i) a planar member (22) having a first upstanding wall (28) that forms a circular recess and at least one finger well opening (30) to the circular recess;
ii) a rosette (24) located centrally within the circular recess for engaging a central aperture of a media disc; and
iii) a second upstanding wall (31) around a periphery of the planar member that forms an indentation for opening the package;
and wherein the a second cover (40) comprises:
i) a planar member (42) having a first upstanding wall (51) around a periphery of the planar member that forms an indentation for opening the package;
ii) a second upstanding wall (48) that forms a circular recess and at least one finger well opening (50) to the circular recess; and
iii) a rosette (44) located centrally within the second circular recess for engaging a central aperture of a media disc.

7. A package according to claim 6 further comprising a spine (80) hingedly connecting the first and second covers for allowing the first and second covers to rotate between a closed position in which the first and second covers are aligned to protect media discs therein and an open position in which the first and second covers are separated to allow access to the media discs therein; a hinge mechanism mounted on the first cover (20) and wherein said intermediate holder (60) is mounted on said hinge mechanism.

8. A package according to any preceding claim, the intermediate holder having:a planar member having a periphery that forms a ridge (74) for engaging the detent (36), a first upstanding wall (68) that forms a circular recess and at least one finger well (70) opening to the circular recess and a rosette (64) located centrally within the circular recess for engaging a central aperture of a media disc.

9. A package as recited in claim 6, wherein the indentations align in the closed position.

10. A package as recited in Claim 8, wherein the intermediate holder further includes: a second upstanding wall that forms a second circular recess and at least one finger well opening to the circular recess on an opposing side from the first upstanding wall and a second rosette located centrally within the second circular recess for engaging a central aperture of a media disc.

11. A package as recited in any preceding claim wherein the second cover includes clips to retain promotional literature.

12. A package as recited in any preceding claim wherein the projection (74) of the intermediate holder (60) projects from an outer surface of the intermediate holder (60) and wherein the detent (36) is formed on an inner surface of the first cover (20).

13. A package as recited in any preceding claim wherein the detent (36) is formed on an inner surface of a recessed portion (34) of the first cover (20).

14. A package as recited in any preceding claim comprising more than one intermediate holder (60) and wherein more than one of the intermediate holders (60) comprises a projection or ridge (74) for being captured by a detent (36) of the first cover (20) or second cover (40) for providing a retentive force to maintain said intermediate holders (60) in a retained position.

## Patentansprüche

1. Verpackung zur Aufnahme von Mediendisks, wobei die Verpackung einen ersten Deckel (20) mit einer Einbuchtung (36) aufweist sowie einen zweiten Deckel (40), der entgegengesetzt zum ersten Deckel (20) angeordnet ist und mit jenem gelenkig verbunden ist, wobei wenigstens ein Deckel von jenem ersten und zweiten Deckel so ausgebildet ist, dass er eine Disk zurückhält und einen Zwischenhalter (60) umfasst, der gelenkig mit dem ersten Deckel (20) verbunden ist und so ausgebildet ist, dass er wenigstens eine Disk hält und **gekennzeichnet durch** den Zwischenhalter (60), der einen Vorsprung (74) einschließt, der Ausnehmung (36) des ersten Deckels (20), und zwar zum Aufnehmen des Vorsprungs (74) und zum Bereitstellen einer Rückhaltekraft, um den Zwischenhalter (60) in einer Halteposition zu halten.

2. Verpackung nach Anspruch 1, die weiterhin eine Rosette (24) auf dem ersten Deckel aufweist, und zwar zum Halten einer Mediendisk.

3. Verpackung nach Anspruch 1 oder 2, die weiterhin wenigstens einen Block (38) auf dem ersten Deckel (20) aufweist, und zwar, um einen Spalt zwischen der Mediendisk und der wenigstens einen Disk auszubilden, wenn jene Disks in der Verpackung sind.

4. Verpackung nach einem der vorhergehenden Ansprüche, die weiterhin Mittel umfasst, um die Verpackung in ihrer geschlossenen Position zu halten.

5. Verpackung nach Anspruch 4, wobei es sich bei jenen Mitteln um wenigstens eine weibliche Buchse (52), ausgebildet in dem zweiten Deckel (40), handelt und um wenigstens einen männlichen Vorsprung (32), der in dem ersten Deckel (20) ausgebildet ist, um die wenigstens eine weibliche Buchse (52) in Eingriff zu nehmen.

6. Verpackung nach einem der vorhergehenden Ansprüche, wobei der erste Deckel (20) umfasst:
(i) ein planares Teil (22), das eine erste aufrechte Wand (28) aufweist, die eine ringförmige Ausnehmung und wenigstens ein Fingerbohrloch (30) aufweist, das zu der ringförmigen Ausnehmung hin öffnet;
(ii) eine Rosette (24), die mittig innerhalb der ringförmigen Öffnung angeordnet ist, und zwar zur In-Eingriffnahme einer mittigen Öffnung einer Mediendisk; und
(iii) eine zweite aufrechte Wand (31), und zwar um den Umfang des planaren Teils, der eine Vertiefung für die Öffnung der Verpackung ausbildet;
und wobei der zweite Deckel (40) umfasst:
(i) ein planares Teil (42), das eine erste aufrechte Wand (51) umfasst, und zwar um den Umfang des planaren Teils, der eine Vertiefung für die Öffnung der Verpackung ausbildet;
(ii) eine zweite aufrechte Wand (48), die eine ringförmige Ausnehmung ausbildet und wenigstens ein Fingerbohrloch (50), das zu der ringförmigen Ausnehmung hin öffnet; und
(iii) eine Rosette (44), die mittig in der zweiten ringförmigen Ausnehmung angeordnet ist, und zwar zur In-Eingriffnahme einer mittigen Öffnungen einer Mediendisk.

7. Verpackung nach Anspruch 6, wobei die Verpackung weiter einen Rücken (80) umfasst, der gelenkig den ersten und zweiten Deckel verbindet, um es dem ersten und zweiten Deckel zu erlauben, zwischen einer geschlossenen Position zu rotieren, in welcher der erste und zweite Deckel verbunden sind, um die Mediendisk darin zu schützen, sowie einer offenen Position, in welcher der erste und zweite Deckel voneinander getrennt sind, um den Zugriff zu den darin befindlichen Mediendisks zu erlauben; einen Gelenkmechanismus, der an dem ersten Deckel (20) montiert ist und wobei der Zwischenhalter (60) auf dem Gelenkmechanismus montiert ist.

8. Verpackung nach einem der vorhergehenden Ansprüche, wobei der Zwischenhalter aufweist: ein planares Teil, das einen Umfang aufweist, dar eine Erhöhung (74) zur In-Eingriffnahme der Einbuchtung (36) ausbildet, eine erste aufrechte Wand (68), die eine ringförmige Ausnehmung und wenigstens ein Fingerbohrloch (70) ausbildet, das sich hin zu der ringförmigen Ausnehmung öffnet, sowie eine Rosette (64), die mittig in der ringförmigen Ausnehmung angeordnet ist, und zwar zur In-Eingriffnahme einer mittigen Öffnungen einer Mediendisk.

9. Verpackung nach Anspruch 6, wobei die Vertiefungen in der geschlossenen Position fluchten.

10. Verpackung nach Anspruch 8, wobei der Zwischenhalter weiterhin einschließt: eine zweite aufrechte Wand, die eine zweite ringförmige Ausnehmung und wenigstens ein Fingerbohrloch ausbildet, das hin zu der ringförmigen Ausnehmung auf einer gegenüberliegenden Seite von der ersten aufrechten Wand öffnet, und eine zweite Rosette, die mittig in der zweiten ringförmigen Ausnehmung angeordnet ist, und zwar In-Eingriffnahme einer mittigen Öffnung einer Mediendisk.

11. Verpackung nach einem der vorhergehenden Ansprüche, wobei der zweite Deckel Klammern einschließt, um Werbeliteratur zu halten.

12. Verpackung nach einem der vorhergehenden Ansprüche, wobei die Erhöhung (74) des Zwischenhalters (60) von einer Außenfläche des Zwischenhalters (60) hervorsteht und wobei die Vertiefung (36) auf einer Innenfläche des ersten Deckels (20) ausgebildet ist.

13. Verpackung nach einem der vorhergehenden Ansprüche, wobei die Vertiefung (36) auf einer Innenfläche eines mit Ausnehmungen versehenen Abschnitts (34) des ersten Deckels (20) ausgebildet ist.

14. Verpackung nach einem der vorhergehenden Ansprüche, die mehr als einen Zwischenhalter (60) aufweist und wobei mehr als einer der Zwischenhalter (60) eine Erhöhung (74) aufweist, die dazu dient, durch eine Vertiefung (36) des ersten Deckels (20) oder des zweiten Deckels (40) gegriffen zu werden, und zwar, um eine Rückhaltekraft auszubilden, um jenen Zwischenhalter (60) in einer Halteposition zu halten.

## Revendications

1. Emballage pour loger des disques multimédia comprenant un premier couvercle (20) présentant un cran (36), un second couvercle (40) opposé au premier couvercle (20) et qui est raccordé par charnières à ce premier couvercle, dans lequel au moins l'un des premier et second couvercles sont conçus de façon à pouvoir retenir un disque, et comprenant un support intermédiaire (60), raccordé par charnières au premier couvercle (20), conçu de façon à pouvoir retenir au moins un disque, et **caractérisé par** le support intermédiaire (60) comprenant un élément en saillie (74), le cran (36) du premier couvercle (20) conçu pour s'encliqueter dans l'élément en saillie (74) et pour fournir une force de rétention permettant de maintenir le support intermédiaire (60) dans une position de retenue.

2. Emballage selon la revendication 1, comprenant en outre une rosace (24) située sur le premier couvercle (20) pour retenir un disque multimédia.

3. Emballage selon la revendication 1 ou 2, comprenant en outre au moins une cale (38) sur le premier couvercle (20) servant à délimiter un espace entre le disque multimédia et le ou les disques, lorsque ces disques existent.

4. Emballage selon l'une quelconque des revendications précédentes, comprenant en outre des moyens pour retenir l'emballage en position fermée.

5. Emballage selon la revendication 4, dans lequel le moyen est formé par au moins un élément de base femelle (51) situé sur le second couvercle (40) et au moins un élément en saillie mâle (32) situé sur le premier couvercle (20) de manière à pouvoir s'enclencher dans le ou les éléments de base femelles (51).

6. Emballage selon l'une quelconque des revendications précédentes, dans lequel le premier couvercle (20) comprend :
i) un organe plan (22) présentant une première paroi verticale (28) qui forme un renforcement circulaire et au moins une ouverture avec une cavité pour les doigts (30) donnant sur l'évidement circulaire ;
ii) une rosace (24) située au centre du renforcement circulaire pour s'enclencher dans une ouverture centrale d'un disque multimédia ; et
iii) une seconde paroi verticale (31) autour d'une périphérie de l'organe plan qui forme une dentelure pour faciliter l'ouverture de l'emballage
et dans lequel le second couvercle (40) comporte :
i) un organe plan (42) présentant une première paroi verticale (51) autour d'une périphérie de l'organe plan qui forme une dentelure facilitant l'ouverture de l'emballage ;
ii) une seconde paroi verticale (48) qui forme un renforcement circulaire et au moins une ouverture avec une cavité pour les doigts (50) donnant sur le renforcement circulaire ; et
iii) une rosace (44) située au centre du second renforcement circulaire pour s'enclencher dans une ouverture centrale d'un disque multimédia.

7. Emballage selon la revendication 6, comprenant en outre une broche (80) qui raccorde par charnières les premier et second couvercles pour permettre aux premier et second couvercles de tourner entre une position fermée dans laquelle les premier et second couvercles sont alignés afin de protéger les disques multimédia à l'intérieur et une position ouverte dans laquelle les premier et second couvercles sont séparés pour permettre l'accès aux disques multimédia à l'intérieur; un mécanisme de charnières monté sur le premier couvercle (20) et dans lequel ledit support intermédiaire (60) est monté sur ledit mécanisme de charnières.

8. Emballage selon l'une quelconque des revendications précédentes, le support intermédiaire comportant: un organe plan ayant une périphérie qui forme une arête (74) configurée pour s'enclencher dans le cran (36), une première paroi verticale (68) qui forme un renforcement circulaire et au moins une cavité pour les doigts (70) s'ouvrant sur le renforcement circulaire, et une rosace (64) située au centre du renforcement circulaire de manière à pouvoir s'enclencher dans une ouverture centrale d'un disque multimédia.

9. Emballage selon la revendication 6, dans lequel les dentelures s'alignent en position fermée.

10. Emballage selon la revendication 8, dans lequel le support intermédiaire comprend en outre: une seconde paroi verticale qui forme un second renforcement circulaire et au moins une ouverture avec une cavité pour les doigts donnant sur le renforcement circulaire sur un côté opposé depuis la première paroi verticale et une seconde rosace située au centre du second renforcement circulaire de manière à pouvoir s'enclencher dans une ouverture centrale d'un disque multimédia.

11. Emballage selon l'une quelconque des revendications précédentes, dans lequel le second couvercle comporte des agrafes pour retenir la documentation publicitaire en place.

12. Emballage selon l'une quelconque des revendications précédentes, dans lequel l'élément en saillie (74) du support intermédiaire (60) fait saillie par une surface externe du support intermédiaire (60), et dans lequel le cran (36) est situé sur une surface interne du premier couvercle (20).

13. Emballage selon l'une quelconque des revendications précédentes, dans lequel le cran (36) est formé sur une surface interne d'une partie en cavité (34) du premier couvercle (20).

14. Emballage selon l'une quelconque des revendications précédentes comportant plus d'un support intermédiaire (60) et dans lequel plusieurs supports intermédiaires (60) comportent un élément en saillie ou une arête (74) conçus pour s'encliqueter dans un cran (36) du premier couvercle (20) ou du second couvercle (40) de manière à fournir une force de rétention permettant de maintenir le support intermédiaire (60) dans une position de retenue.
